# EUROPÄISCHE PATENTSCHRIFT

(11) **EP 2 125 342 B1**
(45) Veröffentlichungstag und Bekanntmachung des Hinweises auf die Patenterteilung: **02.04.2014**
(21) Anmeldenummer: 08716010.7
(22) Anmeldetag: 25.02.2008
(51) Int. Cl.: B29C 70/32, B29C 70/38, B29C 70/52, B29C 70/88, B29C 70/02, B29K 71/00, B29C 70/20, C08K 7/04

(54) **INDUKTIONSGESTÜTZTE FERTIGUNGSVERFAHREN**
INDUCTION-ASSISTED PRODUCTION METHOD
PROCÉDÉ DE FABRICATION ASSISTÉ PAR INDUCTION

(30) Priorität: 24.02.2007 DE 102007009124
(43) Veröffentlichungstag der Anmeldung: 02.12.2009
(73) Patentinhaber: Evonik Degussa GmbH, 45128 Essen (DE)
(72) Erfinder: HERBECK, Lars, 38173 Veltheim (DE); MAHRHOLZ, Thorsten, 38228 Salzgitter (DE); STRÖHLEIN, Tobias, 38110 Braunschweig (DE); MOSCH, Jürgen, 38106 Braunschweig (DE); FRAUENHOFER, Michael, 38118 Braunschweig (DE); BÖHM, Stefan, 38179 Schwülper (DE); DILGER, Klaus, 38106 Braunschweig (DE); HÄGER, Harald, 59348 Lüdinghausen-Seppenrade (DE); BARON, Christian, 45721 Haltern Am See (DE); PRIDÖHL, Markus, 63538 Grosskrotzenburg (DE)
(86) Internationale Anmeldenummer: PCT/EP2008/001464
(87) Internationale Veröffentlichungsnummer: WO 2008/101731

(56) Entgegenhaltungen:
- WO-A-02/12409
- DE-A1-102004 041 746
- US-A1- 2005 245 658

## Beschreibung

### TECHNISCHES GEBIET DER ERFINDUNG

Die Erfindung bezieht sich auf ein Fertigungsverfahren für Formkörper aus Faserverbundwerkstoffen mit den Schritten des Oberbegriffs des Patentanspruchs 1, wobei ein bandförmiges, Verstärkungsfasern und ein duroplastisches oder thermoplastisches Harz aufweisendes Ausgangsmaterial kontinuierlich vorgeschoben oder vorgezogen wird, sowie auf ein Halbzeug zur Verwendung als Ausgangsmaterial oder erhalten als Zwischenprodukt bei einem solchen Fertigungsverfahren, mit den Merkmalen des Oberbegriffs des Patentanspruchs 2.

Das erfindungsgemäße Fertigungsverfahren und das erfindungsgemäße Halbzeug können von duroplastischen oder thermoplastischen Harzen ausgehen, die die Matrix der fertigen Formkörper aus Faserverbundwerkstoffen ausbilden. D. h. das Harz kann in den Formkörpern chemisch, insbesondere durch Vernetzung, und/oder durch Erstarren aufgrund von Temperaturabsenkung aushärten. Der Begriff "thermoplastisches Harz" wird hier gleichbedeutend mit den Begriffen "Thermoplast" und "thermoplastischer Kunststoff" verwendet.

### STAND DER TECHNIK

Ein Fertigungsverfahren für Formkörper aus Faserverbundwerkstoffen, wobei ein bandförmiges, Verstärkungsfasern und aufweisendes Ausgangsmaterial kontinuierlich vorgeschoben oder vorgezogen wird, ist unter dem Stichwort Pultrusion oder auch Strangziehen bekannt. Bei diesem Stand der Technik wird das Ausgangsmaterial typischerweise aus trockenen Verstärkungsfasern zubereitet, die durch eine Harzwanne geführt werden, um sie mit Harz zu tränken. Das derart zubereitete Ausgangsmaterial wird dann einem Formwerkzeug zugeführt, in dem es im kontinuierlichen Durchlauf geformt und bezüglich seines Harzanteils ausgehärtet wird. Aus dem Formwerkzeug tritt der gefertigte Formkörper in Form eines Endlosprofils aus, das dann in Abschnitte gewünschter Länge unterteilt wird. Die Vorzugkraft auf das Ausgangsmaterial wird dabei im Bereich des Endlosprofils durch ein Ziehwerkzeug aufgebracht. Eine Variante der Pultrusion geht von Prepregs genannten Halbzeugen als Ausgangsmaterial aus, die Verstärkungsfasern und Harz aufweisen, das vor dem Eintritt der Prepregs in das Formwerkzeug im Durchlauf durch eine Aufwärmeinrichtung zumindest vorerwärmt wird. Eine weitere Erwärmung des Harzes zum Aushärten desselben kann in dem Formwerkzeug erfolgen. Bei derzeit eingesetzten Pultrudern wird das Ausgangsmaterial mittels Infrarotstrahlung, offener Flamme, Heißluft oder heißem Inertgas vor dem Formwerkzeug erwärmt. Die Erwärmung im Werkzeug erfolgt über das Werkzeug, das seinerseits durch Heizpatronen, Wasser oder Induktionsspulen erwärmt wird.

Die JP 63035334 A offenbart die Erwärmung des Ausgangsmaterials in einem vorderen Bereich eines Formwerkzeugs eines Pulltruders, indem durch eine äußere Magnetspule ein formgebender innen liegender Kern des Formwerkzeugs durch Induktion erwärmt wird. Zusätzlich erfolgt eine Erwärmung des hinteren Teils des Werkzeugs durch eine elektrische Heizung. So wird letztlich das Ausgangsmaterial von innen und außen durch Kontakt mit dem Formwerkzeug erwärmt.

Zu den Fertigungsverfahren für Formkörper aus Faserverbundwerkstoffen, wobei ein bandförmiges, Verstärkungsfasern und ein duroplastisches oder thermoplastisches Harz aufweisendes Ausgangsmaterial kontinuierlich vorgeschoben oder vorgezogen wird, zählen auch das Tapelegen und das Tapewickeln. Hier kommen bislang grundsätzlich dieselben Techniken zur Erwärmung des Ausgangsmaterials zum Einsatz, wie sie oben für die Erwärmung bei der Pultrusion vor dem Formwerkzeug beschrieben wurden. Zusätzlich kann das Ausgangsmaterial auf den Teil des Formkörpers, auf den es bei diesem Fertigungsverfahren aufgelegt bzw. aufgewickelt wird, "aufgebügelt" werden, wobei es mit einem heißen Werkzeug angepresst oder angedrückt wird.

Alle oben geschilderten Verfahren der Erwärmung des Ausgangsmaterials bei der Herstellung von Formkörpern aus Faserverbundwerkstoffen auf der Basis von bandförmigen Ausgangsmaterialien sind mit dem Nachteil verbunden, dass sie keine schnelle und dennoch kontrollierte Erwärmung des Ausgangsmaterials auf erhöhte Temperaturen zulassen, wie sie beispielsweise für hochwertige thermoplastische Harze, so wie PEEK, erforderlich sind, um hieraus mit wirtschaftlich hoher Geschwindigkeit Formkörper auszubilden. Alle diese Techniken erfordern zur Erwärmung mit hoher Erwärmungsrate sehr hohe Kontakttemperaturen, die unmittelbar mit der Gefahr einer Beschädigung des Ausgangsmaterials verbunden sind.

Ein Fertigungsverfahren mit den Merkmalen des Oberbegriffs des unabhängigen Patentanspruchs 1 ist aus der DE 26 03 540 A1 bekannt. Hier wird ein magnetisches Wechselfeld im Bereich von 60 Hz bis 5 MHz, insbesondere von 1 KHz bis 2 MHz in das Ausgangsmaterial eingekoppelt, in dem elektrisch leitende Verstärkungsfasern vorliegen. Das magnetische Wechselfeld ruft in den elektrisch leitenden Verstärkungsfasern Wirbelströme hervor, die aufgrund des elektrischen Widerstands der Verstärkungsfasern zu einer Induktionserwärmung der Verstärkungsfasern und damit des die Verstärkungsfasern aufweisenden Ausgangsmaterials führen. Es stellt sich jedoch heraus, dass das bekannte Fertigungsverfahren sehr hohe Frequenzen des magnetischen Wechselfelds erfordert, um dieses effektiv in elektrisch leitende Verstärkungsfasern geringen Durchmessers einzukoppeln, soweit nicht Wirbelströme über mehrere elektrisch untereinander kontaktierte Verstärkungsfasern hinweg hervorgerufen werden können. Derartige Wirbelströme über mehrere Verstärkungsfasern hinweg sind jedoch bei unidirektional angeordneten Verstärkungsfasern, wie sie bei einem Pultrusionsverfahren häufig zum Einsatz kommen, kaum realistisch. Hohe Frequenzen des magnetischen Wechselfelds resultieren aber in geringe Eindringtiefen des Wechselfelds in das Ausgangsmaterial, so dass es schwierig wird, dieses im Volumen zu erwärmen. Ganz grundsätzlich verlangt das aus der DE 26 03 540 bekannte Fertigungsverfahren Rücksicht bei der Auswahl der Verstärkungsfasern auf deren elektrische Leitungseigenschaften, was die Freiheitsgrade bei der Auswahl der Verstärkungsfasern zur Erreichung der ansonsten gewünschten Eigenschaften der hergestellten Formkörper stark einschränkt.

Aus der DE 38 80 716 T2 ist es bekannt, thermoplastische Schichten, die durch leitende Fasern, wie beispielsweise Kohlenstofffasern, verstärkt sind, dadurch zu verbinden, dass ein magnetisches Wechselfeld in die Fasern eingekoppelt wird, um in diesen elektrische Ströme zu induzieren. Die elektrischen Ströme werden durch den Widerstand der leitenden Fasern in Wärme umgewandelt, die sich auf einen Harzanteil der thermoplastischen Schichten überträgt. Die Induktion der elektrischen Ströme erfolgt erst bei einer relativ großen Frequenz des magnetischen Wechselfelds oberhalb 1 MHz, und sie verlangt, dass die unidirektional verlaufenden leitenden Fasern mehrerer Schichten in verschiedenen Richtungen verlaufen, damit Wirbelströme über die Fasern fließen können. Bei den Ausgangsmaterialien der Verfahren der eingangs beschriebenen Art liegen die Verstärkungsfasern in aller Regel aber nur in einer einzigen Schicht mit unidirektionaler Orientierung in der Vorlaufrichtung des Ausgangsmaterials vor. Zudem ist eine Erwärmung des Harzes über die Verstärkungsfasern ebenfalls mit dem Nachteil verbunden, dass die gesamte Wärme, die dem Harz zugeführt werden soll, von außen, d. h. hier von den leitenden Fasern, auf das Harz übertragen werden muss. Dies begrenzt die mögliche Aufheizungsrate, die unter kontrollierten und beschädigungsfreien Bedingungen möglich ist.

Ein Halbzeug mit den Merkmalen des Oberbegriffs des Patentanspruchs 16 ist aus der DE 692 25 480 T2 bekannt. Hier weist das Halbzeug elektrisch leitende Verstärkungsfasern auf, die aber gerade nicht an ein eingekoppeltes magnetisches Wechselfeld ankoppeln sollen. Vielmehr ist hierfür das Harz des Halbzeugs mit magnetischen Teilchen versetzt, die bei Einkopplung des magnetischen Wechselfelds als Vorzugserhitzungsmaterial dienen sollen. Die magnetischen Teilchen können aus einem magnetischen Oxid bestehen. Die magnetischen Teilchen werden so ausgebildet, dass die Curie-Temperatur der magnetischen Teilchen bis zum Erreichen der Schmelztemperatur oder der Härtungstemperatur des Harzes nicht erreicht wird, weil davon ausgegangen wird, dass oberhalb der Curie-Temperatur keine wesentliche Erhitzung aufgrund des eingekoppelten magnetischen Wechselfelds mehr erfolgt. Bei dem Harz des bekannten Halbzeugs kann es sich um Polyetherketonketon (PEKK) oder Polyetheretherketon (PEEK), das heißt bekannte Hochtemperaturthermoplaste, handeln. Fertigungsverfahren, bei denen ein bandförmiges, Verstärkungsfasern und Harz aufweisendes Ausgangsmaterial kontinuierlich vorgeschoben oder vorgezogen wird, oder ein entsprechendes bandförmiges Ausgangsmaterial finden hier keine Erwähnung oder anderweitige Berücksichtigung.

Aus der WO 02/12409 ist es grundsätzlich bekannt, eine Klebstoffzusammensetzung mit nanoskaligen Partikel mit ferromagnetischen, ferrimagnetischen, superparamagnetischen oder piezoelektrischen Eigenschaften zu versetzen, so dass sich die Klebstoffzusammensetzung bei Einkopplung eines magnetischen Wechselfelds so erwärmt, dass bei thermoplastischen Klebstoffen der Erweichungspunkt des thermoplastischen Bindemittels erreicht bzw. überschritten und bei reaktiven Klebstoffen eine Temperatur erreicht wird, die eine Vernetzung der Bindemittelmatrix über die reaktiven Gruppen des Bindemittels bewirkt. Die superparamagnetischen Partikel sind sogenannte "single-domain-particles". Im Vergleich zu paramagnetischen Partikeln zeichnen sich diese dadurch aus, dass sie keine Hysterese zeigen. Dies hat zur Folge, dass eine Energiedissipation des eingekoppelten magnetischen Wechselfelds nicht durch magnetische Hystereseverluste hervorgerufen wird, sondern die Wärmeerzeugung auf eine während der Einwirkung des Wechselfelds induzierte Schwingung oder Rotation der Partikel in der umgebenen Matrix und somit letztlich auf mechanische Reibungsverluste zurückzuführen ist. Dies führt zu einer besonders effektiven Erwärmungsrate der Partikel und der sie umgebenden Matrix. Die WO 02/12409 befasst sich nicht mit der Herstellung von Formkörpern aus Faserverbundwerkstoffen, insbesondere nicht mit Fertigungsverfahren, bei denen ein bandförmiges, Verstärkungsfasern und Harz aufweisendes Ausgangsmaterial kontinuierlich vorgeschoben oder vorgezogen wird.

### AUFGABE DER ERFINDUNG

Der Erfindung liegt die Aufgabe zugrunde, ein Fertigungsverfahren für Formkörper aus Faserverbundwerkstoffen mit den Schritten des Oberbegriffs des Patentanspruchs 1 und ein Halbzeug mit den Merkmalen des Oberbegriffs des Patentanspruchs 16 aufzuzeigen, die eine hohe Fertigungsgeschwindigkeit auch bei Verwendung von Harzen erlauben, die auf eine hohe Temperatur erwärmt werden müssen, ohne dass dabei die Gefahr von thermischen Beschädigungen der Verstärkungsfasern des Ausgangsmaterials besteht.

### LÖSUNG

Erfindungsgemäß wird die Aufgabe durch ein Fertigungsverfahren mit den Merkmalen des Patentanspruchs 1 und ein Halbzeug mit den Merkmalen des Patentanspruchs 2 gelöst. Die abhängigen Patentansprüche 3 bis 15 betreffen bevorzugte Ausführungsformen des neuen Fertigungsverfahrens, von denen die abhängigen Patentansprüche 2 bis 6 sowie 14, 15 auch bevorzugte Ausführungsformen des neuen Halbzeugs betreffen.

### BESCHREIBUNG DER ERFINDUNG

Bei dem neuen Fertigungsverfahren wird das Ausgangsmaterial im schnellen Durchlauf durch Einkoppeln eines magnetischen Wechselfeldes in das Harz erwärmt. Hierdurch ist eine sehr schnelle, aber gleichzeitig kontrollierte und gleichmäßige Erwärmung des Harzes möglich, so dass dieses auch bei hoher Vorlaufgeschwindigkeit in einem idealen Zustand in den Formkörper geformt wird. Dies hat eine hohe Qualität des Formkörpers zur Folge, wenn das Harz in dem Formkörper ausgehärtet ist. Dies gilt insbesondere in Bezug auf die Herstellung von Formkörpern aus Faserverbundwerkstoffen unter Verwendung hochschmelzender thermoplastischer Harze, beispielsweise solcher, die erst oberhalb 250 °C aufschmelzen, so wie Polyetheretherketon (PEEK) oder Polyphenylensulfid (PPS). Indem bei dem neuen Fertigungsverfahren das magnetische Wechselfeld selektiv in das Harz eingekoppelt wird, werden die Verstärkungsfasern thermisch nicht oder nur wenig belastet. Bei Verarbeitung von thermoplastischem Harz mit hoher Geschwindigkeit können sie sogar gezielt als Wärmepuffer ausgenutzt werden, indem sie nach dem Formen des Ausgangsmaterials in den gewünschten Formkörper bereits mit ihrer Wärmekapazität einen Teil der Wärme aus dem Harz aufnehmen, die zum Aushärten des Harzes aus diesem entfernt werden muss. Die Maximaltemperatur erreicht dann nur das Harz, um es mit anderen Lagen oder Bändern des Ausgangsmaterials dauerhaft in dem Formkörper zu verbinden.

Um die selektive Ankopplung des Harzes des Ausgangsmaterials an das magnetische Wechselfeld zu erreichen, ist das Harz mit superparamagnetischen Partikeln versetzt, die bezüglich der Ausrichtung ihres inneren Magnetfelds an das äußere magnetische Wechselfeld ankoppeln, ohne dass es hierbei die strenge Korrelation zwischen dem Durchmesser der Partikel und der Frequenz des Wechselfelds wie bei der klassischen Erwärmung durch magnetische Induktion gibt. Die Partikel können daher auch ohne besondere Erhöhung der Frequenz des magnetischen Wechselfelds sehr klein sein, wobei sie vorzugsweise eine Partikelgröße von kleiner 500 nm aufweisen. Hierdurch weisen die Partikel verglichen mit ihrem Gewichtsanteil an dem Harz eine sehr große Oberfläche für die Wärmeübertragung auf das Harz auf.

Besonders bevorzugt weisen die superparamagnetischen Partikel Primärpartikel aus magnetischen Metalloxid-Domänen mit einem Durchmesser von 2 bis 100 nm, d. h. von typischerweise weniger als 50 nm Primärpartikelgröße, auf weisen sehr kleine magnetische Partikel, die in der Regel superparamagnetische Eigenschaften aufweisen. Sie sorgen für die Möglichkeit eines besonders hohen Wärmeübertrags in das Harz und das auch bis in den Bereich relativ hoher Temperaturen von 350 bis 550 °C, was völlig ausreichend ist, um auch hochschmelzende thermoplastische Harze aufzuschmelzen.

Die Primärpartikel können in den superparamagnetischen Partikeln in eine nichtmagnetische Metalloxid- oder Metalloidoxid-Matrix eingebettet sein, durch die sie mit einer Schutzschicht, z. B. aus SiO₂ oder einer anderen inerten Verbindung überzogen sind, um gegenüber Lösemittel, Feuchtigkeit und auch reaktiven Bestandteilen des Harzes inert zu sein. Darüber hinaus können derartige und auch andere Schutzschichten dazu vorgesehen sein die Kompatibilität der Partikel mit dem Harz zu verbessern, um sie leichter gleichmäßig in dem Harz dispergieren zu können und um beispielsweise auch einer Bildung von Aggregaten aus den Partikeln vorzubeugen.

Bei derartigen hochgradig kompatiblen superparamagnetischen Partikeln können dem Harz auch relativ hohe Anteile an magnetischen Partikeln bis zu 50 Gewichts-% zugesetzt werden. Es müssen aber nur so viele Partikel zugesetzt werden, wie sie für die erforderliche Erwärmung des Harzes benötigt werden. In Einzelfällen können hierfür auch 0,1 Gewichts-% superparamagnetischen Partikel oder nur wenig mehr ausreichend sein.

Bei dem neuen Fertigungsverfahren ist es völlig unkritisch, wenn die Verstärkungsfasern, wie dies bei üblichen Fertigungsverfahren nach dem Oberbegriff des Patentanspruchs 1 ebenfalls der Fall ist, unidirektional in der Laufrichtung des Ausgangmaterials verlaufen. Im Gegenteil stellt dies sogar bei Verwendung von Verstärkungsfasern aus elektrisch leitfähigem Material, wie beispielsweise Kohlenstofffasern sicher, dass keine relevante Einkopplung des magnetischen Wechselfelds in die Verstärkungsfasern und damit auch keine relevante Aufheizung der Verstärkungsfasern durch induzierte Wirbelströme erfolgt.

Das magnetische Wechselfeld kann bei dem neuen Fertigungsverfahren mit einer Frequenz von 10 kHz bis 60 MHz, typischerweise mit einer Frequenz von 100 kHz bis 10 MHz und vorzugweise mit einer Frequenz von 100 kHz bis 1 MHz in das Harz eingekoppelt werden. Es versteht sich, dass die Frequenz so zu optimieren ist, dass mit minimalem Aufwand ein maximaler Effekt in Bezug auf die gleichmäßige Erwärmung des Harzes erzielt wird. Vorzugsweise wird bei dem neuen Fertigungsverfahren das in den Formkörper geformte Ausgangsmaterial gekühlt. Dies gilt insbesondere für den Fall, dass ein Ausgangsmaterial mit einem thermoplastischen Harz eingesetzt wird, was bei dem neuen Fertigungsverfahren durchaus bevorzugt ist. Durch die Kühlung des Ausgangsmaterials in dem Formkörper wird die zuvor für das Einformen des Ausgangsmaterials in den Formkörper benötigte Plastizität des Harzes wieder beseitigt, um den mit dem Einformen des Ausgangsmaterials in den Formkörper hergestellten Verbund zu fixieren.

Wie bereits angesprochen wurde kann das thermoplastische Harz ein Hochtemperaturthermoplast sein und insbesondere aus einem Polyetherketon oder Polyphenylensulfid bestehen.

Weitere thermoplastische Harze sowie superparamagnetische Partikel, die für die Umsetzung der vorliegenden Erfindung geeignet sind, sind in der WO 2007/042368 A2 offenbart, auf die in vollem Umfang Bezug genommen wird.

In einer konkreten Ausführungsform kann bei dem neuen Fertigungsverfahren das Ausgangsmaterial in einem Pultrusionsprozess in den Formkörper geformt werden. Dabei kann das magnetische Wechselfeld direkt vor einem Formwerkzeug in das Ausgangsmaterial eingekoppelt werden, so dass das Ausgangsmaterial erwärmt wird, bevor es in das Formwerkzeug eintritt.

In einer anderen konkreten Ausführungsform des neuen Fertigungsverfahrens wird das Ausgangsmaterial in einem Tapelegeprozess an einen bereits vorhandenen Teil des Formkörpers angeformt. Dabei kann das magnetische Wechselfeld im Bereich zwischen Führungsrollen und einem gekühlten Anpresswerkzeug für das Ausgangsmaterial in das Ausgangsmaterial eingekoppelt werden. Bei diesem neuen Tapelegeprozess wird also das Ausgangsmaterial mit dem Anpresswerkzeug bereits wieder gekühlt, so dass sich der bereits vorhandene Teil des Formkörpers insgesamt auf einer relativ niedrigen Temperatur befindet. Dies hat zur Folge, dass der bereits vorhandene Teil des Formkörpers formstabil ist.

Bei einer anderen Ausführungsform des neuen Fertigungsverfahrens wird das Ausgangsmaterial in einem Wickelprozess auf einen bereits vorhandenen Teil des Formkörpers aufgewickelt. Dabei kann sich theoretisch eine Rovingführung um den bereits vorhandenen Teil des Formkörpers bewegen. Typischerweise wird aber der bereits vorhandene Teil des Formkörpers gedreht werden. Das magnetische Wechselfeld kann dabei im Bereich zwischen der Rovingführung und einem hier ebenfalls gekühlten Andrückwerkzeug für das Ausgangsmaterial in das Ausgangsmaterial eingekoppelt werden.

Eine Fertigungsvorrichtung für Formkörper aus Faserverbundwerkstoffen, mit der das neue Fertigungsverfahren umsetzbar ist, weist eine Aufwärmeinrichtung zum Einkoppeln des magnetischen Wechselfelds in das Harz des durchlaufenden Ausgangsmaterials auf.

Vorzugsweise ist zur Erzeugung des magnetischen Wechselfelds ein Wechselstromgenerator vorgesehen, der einen Wechselstrom mit einer Frequenz von 100 kHz bis 1 MHz durch eine Induktionsspule der Aufwärmeinrichtung generiert.

Die Fertigungsvorrichtung weist neben der Aufwärmvorrichtung vorzugsweise eine Kühleinrichtung zum Kühlen des in dem Formkörper geformten Ausgangsmaterials auf.

Konkret kann die Fertigungsvorrichtung ein Pultruder sein. Dabei kann die Aufwärmeinrichtung vor einem Formwerkzeug für das Ausgangsmaterial vorgesehen sein.

Bei der Fertigungsvorrichtung kann es sich auch um einen Tapeleger handeln, dabei kann die Aufwärmeinrichtung im Bereich zwischen Führungsrollen und einem gekühlten Anpresswerkzeug für das Ausgangsmaterial vorgesehen sein.

In einer weiteren konkreten Ausführungsform ist die Fertigungsvorrichtung ein Tapewickler. Bei diesem kann die Aufwärmeinrichtung im Bereich zwischen einer Rovingführung und einem gekühlten Andrückwerkzeug für das Ausgangsmaterial vorgesehen sein.

In allen Ausführungsformen des neuen Fertigungsverfahrens können zusätzliche Schritte vorgesehen sein, um das Ausgangsmaterial aus zunächst trockenen Verstärkungsfasern und dem jeweiligen Harz auszubilden, in dem die Verstärkungsfasern beispielsweise durch eine Wanne laufen, die mit flüssigem Harz gefüllt ist. Umgekehrt kann es sich bei dem Ausgangsmaterial auch um so genannten Prepregs handeln, die bereits mit Harz getränkt sind.

Ein erfindungsgemäßes Halbzeug, das zur Verwendung als Ausgangsmaterial bei dem erfindungsgemäßen Fertigungsverfahren vorgesehen werden oder als Zwischenprodukt bei dem erfindungsgemäßen Verfahren erhalten werden kann, ist dadurch gekennzeichnet, dass es ein in einer Haupterstreckungsrichtung langgestrecktes Band ist und die magnetischen Partikel, mit denen das thermoplastische Harz versetzt ist, superparamagnetische Partikel sind. Diese und die bevorzugten weiteren Merkmale des erfindungsgemäßen Halbzeugs sind oben im Zusammenhang mit dem erfindungsgemäßen Verfahren näher erläutert.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von konkreten Ausführungsbeispielen unter Bezugnahme auf die beigefügten Figuren näher erläutert und beschrieben.
- **Fig. 1**: zeigt den prinzipiellen Aufbau einer ersten Ausführungsform eines Tapelegers in einem schematischen Längsschnitt entlang der Vorlaufrichtung von verarbeitetem Ausgangmaterial,
- **Fig. 2**: zeigt eine zweite Ausführungsform des Tapelegers in einem schematischen Längsschnitt,
- **Fig. 3**: zeigt eine dritte Ausführungsform des Tapelegers in einem schematischen Längsschnitt, und
- **Fig. 4**: zeigt eine vierte Ausführungsform des Tapelegers in einem schematischen Längsschnitt;
- **Fig. 5**: zeigt eine erste Ausführungsform eines Tapewicklers in einem schematischen Längsschnitt entlang der Vorlaufrichtung von verarbeitetem Ausgangmaterial,
- **Fig. 6**: zeigt eine zweite Ausführungsform des Tapewicklers in einem schematischen Längsschnitt, und
- **Fig. 7**: zeigt eine dritte Ausführungsform des Tapewicklers in einem schematischen Längsschnitt;
- **Fig. 8**: zeigt eine erste Ausführungsform eines Pultruders in einem schematischen Längsschnitt entlang der Vorlaufrichtung von verarbeitetem Ausgangmaterial,
- **Fig. 9**: zeigt eine zweite Ausführungsform des Pultruders in einem schematischen Längsschnitt, und
- **Fig. 10**: zeigt eine dritte Ausführungsform des Pultruders in einem schematischen Längsschnitt; und
- **Fig. 11**: zeigt eine Auftragung von Aufheizkurven für thermoplastische UD-Carbonprepregs teilweise angereichert mit magnetischen Nanopartikeln als Funktion der elektrischen Leistung einer Aufwärmeinrichtung, die ein magnetisches Feld in das Harz der UD-Carbonprepregs einkoppelt.

### FIGURENBESCHREIBUNG

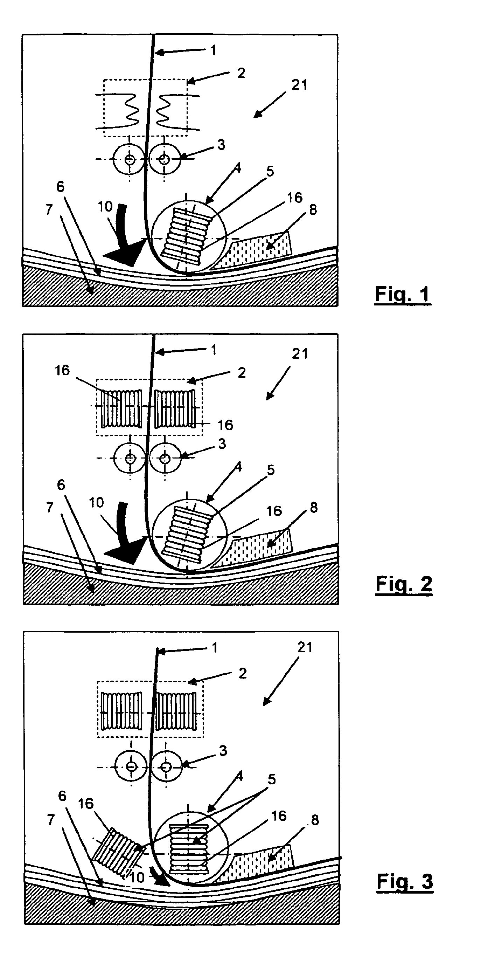

Ein in **Fig. 1** schematisch dargestellte Tapeleger dient dazu, einen Formkörper aus bandförmigem Ausgangsmaterial 1 herzustellen. Das Ausgangsmaterial 1 weist unidirektional in einer Vorlaufrichtung 10 des Ausgangsmaterials in dem Tapeleger verlaufende Verstärkungsfasern und ein thermoplastisches Harz auf. Mit dem Tapeleger gemäß Fig. 1 wird das Ausgangsmaterial 1 lagenweise auf ein Werkzeug 7 aufgebracht. Dabei liegt nur die erste Lage des Ausgangsmaterials 1 unmittelbar an dem Werkzeug 7 an. Die weiteren Lagen des Ausgangsmaterials 1 werden auf den schon auf dem Werkzeug 7 befindlichen Teil 6 des gewünschten Formkörpers aufgebracht. Um dabei einen dauerhaften Verbund zwischen dem neu aufgebrachten Ausgangsmaterial 1 und dem Teil 6 auszubilden, wird das Ausgangsmaterial 1 zunächst in einer Vorerwärmungseinrichtung 2 angewärmt, die hier so angedeutet ist, dass sie eine elektrische Heizung aufweist. Die Erwärmung des Ausgangsmaterials 1 auf die Fügetemperatur, die erforderlich ist, um einen dauerhaften Verbund mit dem fertigen Teil 6 des gewünschten Formkörpers herzustellen, wird jedoch erst im Anschluss an eine Rollenführung 3 mit einer Aufwärmeinrichtung 5 herbeigeführt, die hier mit einer Ablegewalze 4 für das Ausgangsmaterial 1 kombiniert ist. Konkret weist die Aufwärmeinrichtung 5 eine innerhalb der Ablegewalze 4 angeordnete Induktionsspule 16 auf. Ein hier nicht dargestellter Wechselstromgenerator erzeugt einen Wechselstrom durch die Injektionsspule 16. Das resultierende magnetische Wechselfeld wird in das Harz des Ausgangsmaterials 1 eingekoppelt. Um diese Einkopplung und eine hieraus resultierende Erwärmung des Harzes zu fördern, ist das Harz des Ausgangsmaterials 1 mit superparamagnetischen Partikeln versetzt. Diese erlauben es, das Harz des Ausgangsmaterials 1 während des Ablegens mit der Ablegewalze 4 sehr schnell auf eine für den Verbund mit dem schon vorhandenen Teil 6 des gewünschten Formkörpers ausreichend hohe Temperatur aufzuwärmen. Dies gilt selbst dann, wenn das Harz des Ausgangsmaterials 1 ein erst bei hoher Temperatur oberhalb 250 °C aufschmelzendes thermoplastisches Harz ist. Im Anschluss an den Bereich des magnetischen Wechselfelds der Induktionsspule 16 wird das abgelegte Ausgangsmaterial 1 mit einer Kühlung 8 weiter angedrückt und dabei bereits wieder bis unter seine Schmelztemperatur abgekühlt, um seinen Verbund mit den tieferliegenden Lagen des Ausgangsmaterials zu fixieren.

Die Ausführungsform des Tapelegers gemäß **Fig. 2** unterscheidet sich von derjenigen gemäß Fig. 1 dadurch, dass hier auch die Vorerwärmungseinrichtung 2 auf Induktionsspulen 16 aufbaut, mit denen ein magnetisches Wechselfeld erzeugt wird, um es in das Harz des Ausgangsmaterials 1 zu dessen Erwärmung einzukoppeln.

Bei der Ausführungsform des Tapelegers gemäß **Fig. 3** ist die Aufwärmeinrichtung 5 mit einer weiteren Induktionsspule 16 außerhalb der Ablegewalze 4 ausgestattet, die im Einlauf des Ausgangsmaterials 1 ein magnetisches Wechselfeld in das Harz des Ausgangsmaterials 1 in dem Spalt zwischen der Ablegewalze 4 und dem schon vorhandenen Teil 6 des gewünschten Formkörpers einkoppelt. Dafür ist die Induktionsspule 16 innerhalb der Ablegewalze 4 gegenüber denjenigen in den Fig. 1 und 2 etwas in der Vorlaufrichtung 10 verdreht, so dass das Ausgangsmaterial 1 gemäß Fig. 3 über einen längeren Bereich aufgewärmt wird, der sich bis in den Fügebereich mit dem Teil 6 des schon vorhandenen Formkörpers erstreckt.

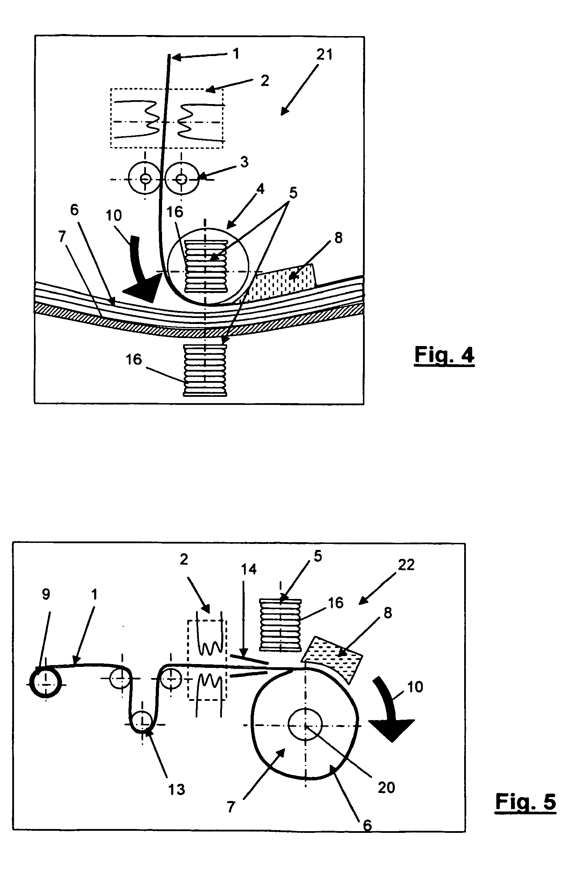

Bei dem in **Fig. 4** skizzierten Tapeleger ist wieder eine Vorerwärmungseinrichtung 2 mit elektrischer Heizung vorgesehen. Hier weist die Aufwärmungseinrichtung 5 neben der Induktionsspule 16 in der Ablegewalze 4 eine weitere Induktionsspule 16 auf der Rückseite des Werkzeugs 7 auf. Eine derart paarweise Anordnung von Induktionsspulen 16, wie sie auch bei den Vorerwärmungseinrichtungen 2 gemäß den Fig. 2 und 3 gegeben ist, ermöglicht eine Fokussierung des magnetischen Wechselfelds auf einen bestimmten Bereich. Die Anordnung gemäß Fig. 4 wärmt dabei auch das Harz der bereits abgelegten Lagen des Ausgangsmaterials 1 auf, was für eine innige Verbindung mit dem neu abgelegten Ausgangsmaterial 1 von Vorteil sein kann.

**Fig. 5** zeigt den Aufbau eines Tapewicklers 22 als weitere grundsätzliche Ausführungsform der vorliegenden Erfindung. Mit dem Tapewickler wird bandförmiges Ausgangsmaterial 1 wieder bestehend aus Verstärkungsfasern und thermoplastischem Harz auf ein Werkzeug 7 aufgewickelt, das durch einen hier nicht dargestellten Drehantrieb um eine Achse 20 umläuft. Das bandförmige Ausgangsmaterial 1 wird mehrlagig auf das Werkzeug 4 aufgewickelt, um einen rohrförmigen Formkörper aus Faserverbundmaterial auszubilden. Das Ausgangsmaterial wird als Prepreg von einer Vorratsrolle 9 abgezogen. Seine Spannung wird mit Hilfe einer federbelasteten Tenzerrolle eingestellt. Anschließend durchläuft es eine Vorerwärmungseinrichtung 2, die gemäß Fig. 5 mit einer elektrischen Heizung ausgestattet ist. Dann tritt das Ausgangsmaterial durch eine sogenannte Rovingführung 14 hindurch. Im Anschluss daran gelangt das Ausgangsmaterial 1 in den Einwirkungsbereicht der Aufwärmeinrichtung 5, die hier eine Induktionsspule 16 zum Einkoppeln eines elektromagnetischen Wechselfelds in das Harz des Ausgangsmaterials 1 aufweist. Das auf das Werkzeug 7 bzw. den dort bereits befindlichen Teil 6 des gewünschten Formkörpers aufgewickelte Ausgangsmaterial wird mit einer Kühlung 8 gekühlt, die den Verbund des im plastischen Zustand aufgewickelten Ausgangsmaterials mit dem Rest des Teils 6 des Formkörpers fixiert.

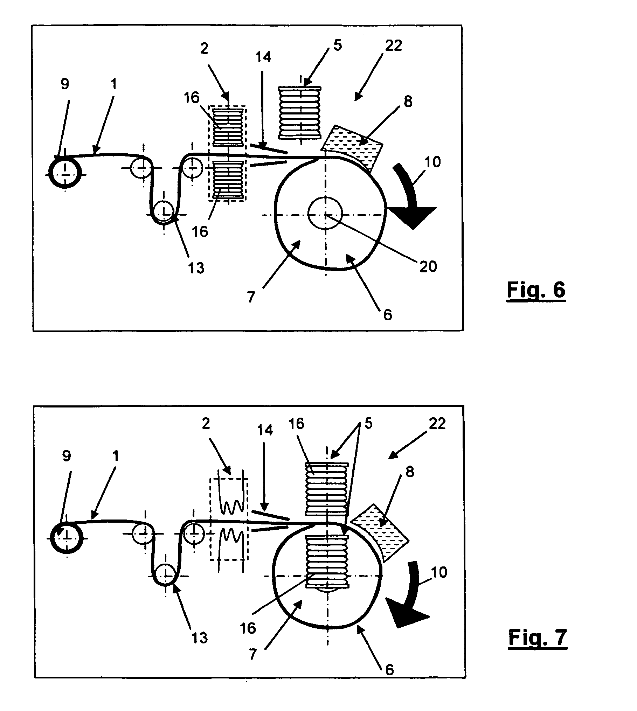

Die in **Fig. 6** skizzierte Ausführungsform des Tapewicklers 22 ist gegenüber der Ausführungsform gemäß Fig. 5 in Bezug auf die Ausbildung der Vorerwärmungseinrichtung 2 variiert. Gemäß Fig. 6 weist die Vorerwärmungseinrichtung 2 zwei Induktionsspulen 16 zur Erzeugung eines in das Harz des Ausgangsmaterials 1 einzukoppelnden magnetischen Wechselfelds auf. D. h., die gesamte Erwärmung des Ausgangsmaterials 1 erfolgt gemäß Fig. 6 durch Einkopplung magnetischer Wechselfelder in das Harz. In der in **Fig. 7** gezeigten Ausführungsform des Tapewicklers 22 weist die Vorerwärmungseinrichtung 2 wieder eine elektrische Heizung auf. Hier ist die Aufwärmeinrichtung 5 im Bereich des Auflaufens des Ausgangsmaterials 1 auf das Werkzeug 7 mit zwei einander über das Ausgangsmaterial 1 gegenüberliegenden Induktionsspulen 16 ausgerüstet, von denen eine innerhalb des Werkzeugs 7 angeordnet ist. Dies entspricht grundsätzlich der Ausführungsform des Tapelegers gemäß Fig. 4.

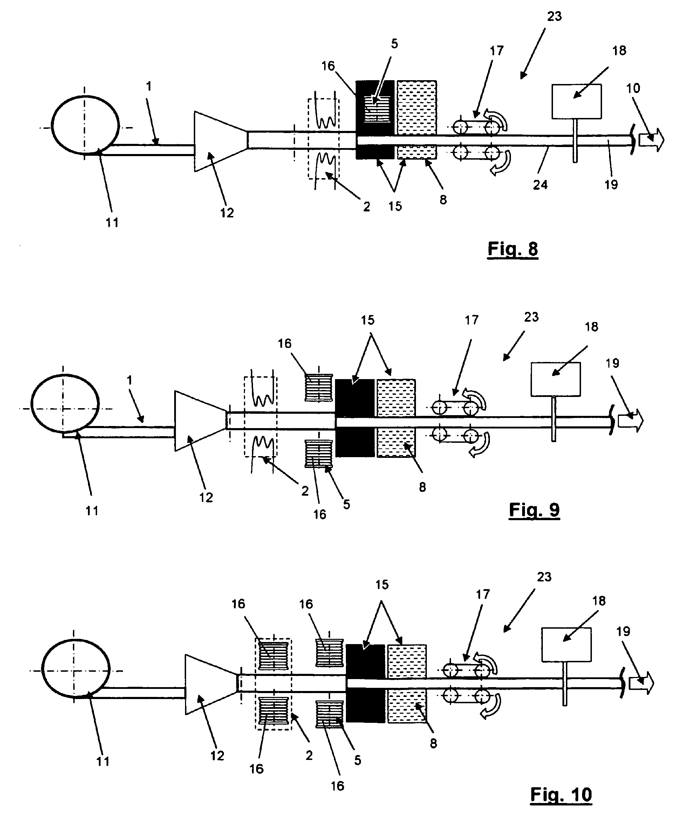

**Fig. 8** zeigt den prinzipiellen Aufbau einer ersten Ausführungsform eines Pultruders 23, in dem bandförmiges Ausgangsmaterial 1 zu einem Endlosprofil 24 geformt und ausgehärtet wird. Das Endlosprofil 24 wird mit einem Schneidwerkzeug 18 in Profilabschnitte 25 unterteilt. Das Ausgangsmaterial 1 weist auch hier wieder Verstärkungsfasern und ein thermoplastisches Harz auf. Es wird aus einem Rohmaterialspeicher 11 abgezogen, wobei unterschiedliche Lagen des Ausgangsmaterials 1 räumlich kombiniert werden können. Das Ausgangsmaterial 1 läuft dann in eine Materialführung 12 ein, innerhalb derer es die Vorerwärmungseinrichtung 2 durchläuft. Die Vorerwärmungseinrichtung 2 ist hier mit einer elektrischen Heizung ausgestattet. Danach tritt das Ausgangsmaterial 1 in ein Formwerkzeug 15 ein. Im vorderen Teil des Formwerkzeugs 15 ist hier die Aufwärmeinrichtung 5 mit einer Induktionsspule 16 vorgesehen. Der hintere Teil des Formwerkzeugs 15 ist mit einer Kühlung 8 versehen. Aus dem Formwerkzeug 15 tritt bereits das Endlosprofil 24 aus, an dem ein Zielwerkzeug 17 angreift. Mit dem Zielwerkzeug 17 wird der gesamte Vorzug in der Vorlaufrichtung 10 auf das Ausgangsmaterial 1 ausgeübt.

Die Ausführungsform des Pultruders 23 gemäß **Fig. 9** unterscheidet sich von derjenigen gemäß **Fig. 8** durch eine von dem Formwerkzeug 15 getrennte Aufwärmeinrichtung 5 mit hier zwei einander über die Materialführung 12 bzw. das darin laufende Ausgangsmaterial 1 gegenüberliegenden Induktionsspulen 16.

Bei dem Pultruder 23 gemäß **Fig. 10** ist zusätzlich auch die Vorerwärmungseinrichtung 2 auf der Basis von Induktionsspulen 16 aufgebaut.

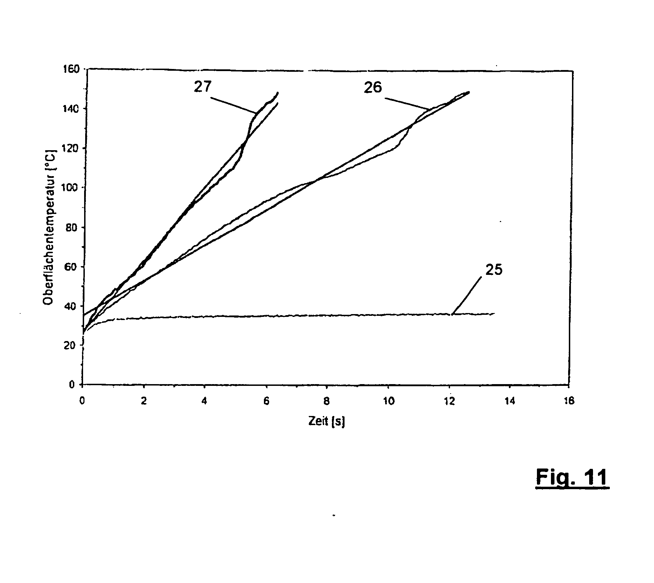

Fig. 11 zeigt mit der Aufheizkurve 25 für ein thermoplastisches UD-Carbonprepreg ohne Zuschlag von superparamagnetischen Partikeln zu dem Harz, dass durch Einkoppeln eines magnetischen Wechselfelds selbst dann keine nennenswerte Erwärmung erzielt werden kann, wenn für das Erzeigen des magnetischen Wechselfelds eine Leistung von 5 kW zur Verfügung steht. Demgegenüber demonstrieren die Aufheizkurven 26 und 27, die für das Ausgangsmaterial 1 gelten, bei dem dem Harz superparamagnetische Partikel zugesetzt sind, dass trotz der unidirektional verlaufenden und damit für eine Ankopplung an das magnetische Wechselfeld ungeeigneten, obwohl grundsätzlich elektrisch leitenden Kohlenstofffasern eine effektive Ankopplung an das magnetische Wechselfeld erfolgt. Diese Ankopplung erfolgt mit den dem Harz zugesetzten magnetischen Partikeln originär über das Harz und damit genau dort, wo die Wärme zum Aufschmelzen des Harzes benötigt wird. Der Aufheizkurve 27 liegt dieselbe Leistung des elektromagnetischen Wechselfelds zugrunde wie der Aufheizkurve 25. Ihre Steigung, d. h. die Heizrate beträgt 19 Kelvin pro s. Bereits die für die halbe Leistung von 2,5 kW aufgenommene Aufheizkurve 26 entspricht einer Heizrate von 9 Kelvin pro s. So kann das Harz des Ausgangsmaterials 1, insbesondere wenn es vorgewärmt wurde, mit Hilfe des eingekoppelten magnetischen Wechselfelds sehr schnell so aufgeschmolzen werden, wie es für die nachfolgende Verarbeitung des Ausgangsmaterials zur Herstellung des Formkörpers als Faserverbundwerkstoff erforderlich ist.

### Für die Umsetzung der Erfindung geeignete Harze

Geeignete Harze sind beispielsweise Polyolefine wie Polyethylen oder Polypropylen, Polyamide, Polyphenylenether (PPE), Polyamid/PPE-Blends, Polycarbonat, Polyester wie Polyarylat, Polyethylenterephthalat oder Polybutylenterephthalat (PBT) oder Polycarbonat/PBT-Blends.

Als Polyamide kommen in erster Linie aliphatische oder teilaromatische Homo- und Copolykondensate in Frage, beispielsweise PA 46, PA 66, PA 68, PA 610, PA 612, PA 614, PA 410, PA 810, PA 1010, PA 412, PA 1012, PA 1212, PA 6/6T, PA 66/6T, PA 6, PA 7, PA 8, PA 9, PA 10, PA 11 und PA 12. (Die Kennzeichnung der Polyamide entspricht internationaler Norm, wobei die erste (n) Ziffer(n) die C-Atomzahl des Ausgangsdiamins und die letzte (n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist; im Übrigen sei verwiesen auf H. Domininghaus, Die Kunststoffe und ihre Eigenschaften, Seiten 272 ff., VDI-Verlag, 1976.)

Besonders bevorzugt werden aromatische Polymere, die wiederkehrende Einheiten der Formel 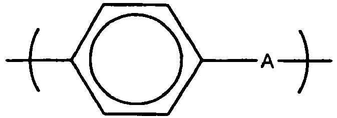 enthalten, wobei -A- aus der Gruppe -O-, -S- und 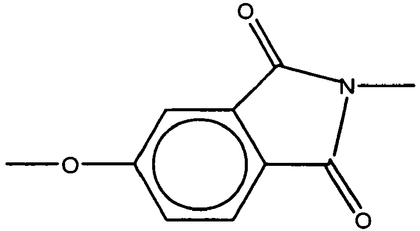 ausgewählt ist. Zusätzlich können gegebenenfalls wiederkehrende Einheiten der Formel 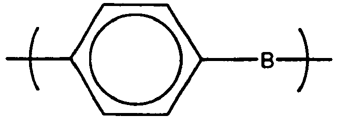 mit -B- = -CO- oder -SO₂- enthalten sein.

Beispiele hierfür sind Polyarylenetherketone (PAEK), Polysulfone, Polyphenylensulfid, Polyimide, einschließlich Polyetherimid, sowie Mischungen hiervon oder mit anderen Polymeren.

Polyarylenetherketone werden in einer gebräuchlichen Herstellungsmethode durch Polykondensation hergestellt. Bei dieser sogenannten nucleophilen Route wird eine geeignete organische Diolverbindung mit einer geeigneten organischen Dihalogenverbindung zur Reaktion gebracht. Die Reaktion wird üblicherweise in einem Lösemittel wie beispielsweise Diphenylsulfon unter Verwendung von sogenannten Hilfsbasen durchgeführt, die als feste Bestandteile in der Reaktionsmischung vorliegen; üblicherweise setzt man hier eine Mischung aus Natriumcarbonat und Kaliumcarbonat in annähernd stöchiometrischer Menge ein. Diese Herstellungsmethode ist in einer Vielzahl von Patentanmeldungen beschrieben, beispielsweise in EP-A-0 001 879, EP-A-0 182 648 und EP-A-0 244 167. Üblicherweise werden für die Herstellung von PAEK aromatische Difluorverbindungen und Bisphenole verwendet; so wird bei der Herstellung von Polyetheretherketon (PEEK) gemäß der nucleophilen Route als Diolkomponente Hydrochinon und als Dihalogenkomponente das 4.4'-Difluorbenzophenon eingesetzt.
Das PAEK enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei sollten mindestens 50 %, bevorzugt mindestens 70 % und besonders bevorzugt mindestens 80 % der Gruppen X eine Carbonylgruppe darstellen, während mindestens 50 %, bevorzugt mindestens 70 % und besonders bevorzugt mindestens 80 % der Gruppen Y aus Sauerstoff bestehen sollten.

In der insbesondere bevorzugten Ausführungsform bestehen 100 % der Gruppen X aus Carbonylgruppen und 100 % der Gruppen Y aus Sauerstoff. In dieser Ausführungsform kann das PAEK beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

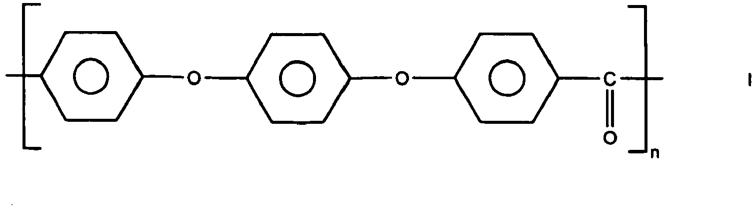

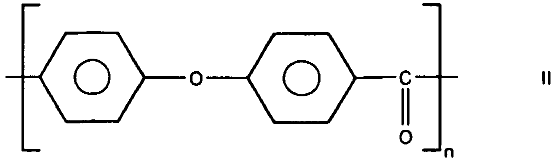

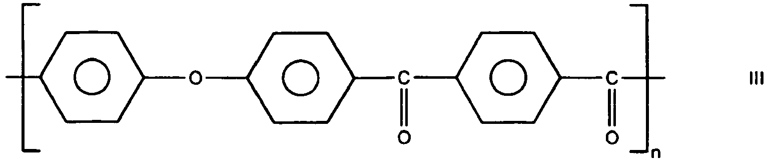

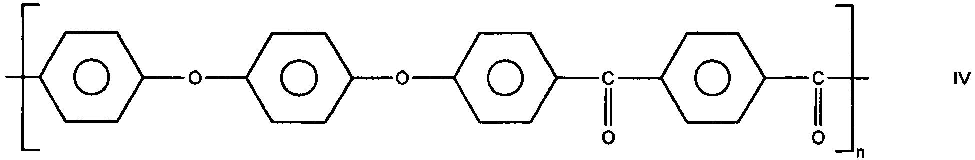

Das PAEK ist im Allgemeinen teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt. Jedoch ist die Lehre der Erfindung auch auf amorphe PAEK anwendbar. Im Allgemeinen gilt, dass Sulfonylgruppen, Biphenylengruppen, Naphthylengruppen oder sperrige Gruppen Y, wie z. B. eine Isopropylidengruppe, die Kristallinität verringern.

Geeignete Polysulfone werden in der Regel durch Polykondensation eines Bisphenol/Dihalogendiarylsulfon-Gemisches in einem aprotischen Lösemittel in Gegenwart einer Base wie z. B. Natriumcarbonat hergestellt. Als Bisphenol werden vorzugsweise Bisphenol A, 4.4'-Dihydroxydiphenylsulfon, 4.4'-Dihydroxydiphenyl oder Hydrochinon verwendet, wobei auch Gemische aus verschiedenen Bisphenolen eingesetzt werden können. Die Dihalogenverbindung ist in den meisten Fällen 4.4'-Dichlordiphenylsulfon; es kann aber auch jede andere Dihalogenverbindung eingesetzt werden, bei der das Halogen durch eine para-ständige Sulfongruppe aktiviert ist. Als Halogen ist neben Chlor auch Fluor geeignet. Der Begriff "Polysulfon" schließt auch die Polymeren ein, die üblicherweise als "Polyethersulfon" oder "Polyphenylensulfon" bezeichnet werden. Geeignete Typen sind kommerziell erhältlich. Polyphenylensulfid wird aus 1.4-Dichlorbenzol und Natriumsulfid in einem hochsiedenden Lösemittel hergestellt. Es ist in einer Vielzahl von Handelstypen kommerziell erhältlich.

Polyimide werden auf bekannte Weise aus Tetracarbonsäuren oder deren Anhydriden und Diaminen hergestellt. Wenn die Tetracarbonsäure und/oder das Diamin eine Ethergruppe enthält, resultiert ein Polyetherimid. Eine besonders geeignete ethergruppenhaltige Tetracarbonsäure ist die Verbindung der Formel V; aus ihr werden zusammen mit aromatischen Diaminen amorphe Polyetherimide erhalten, die kommerziell erhältlich sind.

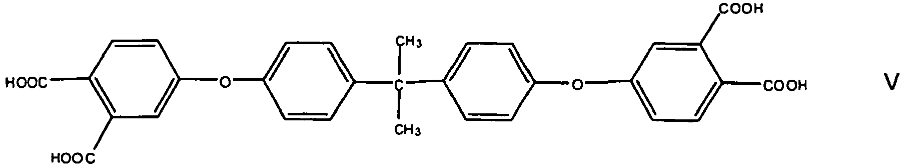

### Für die Umsetzung der Erfindung geeignete superparamagnetische Partikel

Geeignete superparamagnetische Partikel werden beispielsweise in der EP-A-1284485 sowie in der DE 10317067 beschrieben, auf die im vollen Umfang Bezug genommen wird.

Bei der Erfindung liegen die superparamagnetischen Partikel in dem Harz in Form nanoskaliger oxidischer Partikel vor, die vorzugsweise homogen verteilt und insbesondere in nicht agglomeriert sind. Insbesondere sind diese Partikel in dem Harz temperaturstabil und zeigen auch bei hohen Temperaturen keine Agglomeration. Weiterhin ist es möglich, die Rheologie des Harzes weitestgehend unabhängig vom Gehalt an solchen Partikeln zu steuern.

In den superparamagnetischen Partikeln können mehrer Primärpartikel aggregiert sein. Unter aggregiert oder Aggregaten sind dreidimensionale Strukturen von verwachsenen Primärpartikeln zu verstehen. Mehrere Aggregate können sich zu Agglomeraten verbinden. Diese Agglomerate lassen sich etwa durch mechanische Einwirkung, zum Beispiel bei Extrusionsvorgängen, leicht wieder trennen. Im Gegensatz hierzu ist die Zerlegung der Aggregate in die Primärpartikel in der Regel nicht möglich.

Der Aggregatdurchmesser der superparamagnetischen Partikel ist bevorzugt größer als 100 nm und kleiner als 1 µm. Vorzugsweise weisen die Aggregate der superparamagnetischen Partikel wenigstens in einer Raumrichtung einen Durchmesser von nicht mehr als 250 nm auf.

Unter Domänen sind räumlich voneinander getrennte Bereiche in einer Matrix zu verstehen. Die Domänen der superparamagnetischen Partikel haben einen typischen Durchmesser zwischen 2 und 100 nm. Die Domänen können auch nichtmagnetische Bereiche aufweisen, die aber dann keinen Beitrag zu den magnetischen Eigenschaften der superparamagnetischen Partikel leisten.

Zusätzlich können in den superparamagnetischen Partikeln auch magnetische Domänen vorliegen, die aufgrund ihrer Größe keinen Superparamagnetismus zeigen und eine Remanenz induzieren. Dies führt zur Erhöhung der volumenspezifischen Sättigungsmagnetisierung. Gemäß der vorliegenden Erfindung gilt, dass die superparamagnetischen Partikel eine solche Anzahl an superparamagnetischen Domänen enthalten, um das Harz, dem sie zugegeben sind, mittels eines magnetischen Wechselfeldes auf seine Aushärte- oder Schmelztemperatur erhitzen zu können.

Die Domänen der superparamagnetischen Partikel können von der umgebenden Matrix vollständig oder nur teilweise umschlossen sein. Teilweise umschlossen heißt, dass einzelne Domänen aus der Oberfläche eines Aggregates herausragen können. In jedem Fall sind die superparamagnetischen Domänen der Partikel nicht-agglomeriert.

Die magnetischen Domänen können ein oder mehrere Metalloxide aufweisen. Bevorzugt enthalten die magnetischen Domänen Oxide von Eisen, Kobalt, Nickel, Chrom, Europium, Yttrium, Samarium oder Gadolinium enthalten. In diesen Domänen können die Metalloxide in einer einheitlichen Modifikation oder in verschiedenen Modifikationen vorliegen. Eine besonders bevorzugte magnetische Domäne ist Eisenoxid in der Form von gamma-Fe₂O₃ (γ-Fe₂O₃), Fe₃O₄, Mischungen aus gamma-Fe₂O₃ (γ-Fe₂O₃) und/oder Fe₃O₄.

Die magnetischen Domänen können weiterhin als Mischoxid wenigstens zweier Metalle mit den Metallkomponenten Eisen, Kobalt, Nickel, Zinn, Zink, Cadmium, Magnesium, Mangan, Kupfer, Barium, Magnesium, Lithium oder Yttrium vorliegen.

Die magnetischen Domänen können weiterhin Stoffe mit der allgemeinen Formel M"Fe₂O₄ sein, worin M" für eine Metallkomponente steht, die wenigstens zwei voneinander verschiedene, zweiwertige Metalle umfasst. Bevorzugt kann eines der zweiwertigen Metalle Mangan, Zink, Magnesium, Kobalt, Kupfer, Cadmium oder Nickel sein.

Weiterhin können die magnetischen Domänen aus ternären Systemen der allgemeinen Formel (M^{a}₁₋ₓ₋y M^{b}ₓFe_{y})"Fe₂"O₄ aufgebaut sein, wobei M^{a}, beziehungsweise M^{b} die Metalle Mangan, Kobalt, Nickel, Zink, Kupfer, Magnesium, Barium, Yttrium, Zinn, Lithium, Cadmium, Magnesium, Calcium, Strontium, Titan, Chrom, Vanadium, Niob, Molybdän sein, mit x = 0,05 bis 0,95, y = 0 bis 0,95 und x+y ≤ 1.

Besonders bevorzugt können ZnFe₂O₄, MnFe₂O₄, Mn_{0,6}Fe_{0,4}Fe₂O₄, Mn_{0,5}Zn_{0,5}Fe₂O₄. Zn_{0,1}Fe_{1,9}O₄, Zn_{0,2}Fe_{1,8}O₄, Zn_{0,3}Fe_{1,7}O₄, Zn_{0,4}Fe_{1,6}O₄ oder Mn_{0,39}Zn_{0,27}Fe_{2,34}O₄, MgFe₂O₃, Mg_{1,2}Mn_{0,2}Fe_{1,6}O_{4,} Mg_{1,4}Mn_{0,4}Fe_{1,2}O₄, Mg_{1,6}Mn_{0,6}Fe_{0,8}O₄, Mg_{1,8}Mn_{0,8}Fe_{0,4}O₄ sein.

Die Wahl des Metalloxides der nichtmagnetischen Matrix ist nicht weiter beschränkt. Bevorzugt können diese Oxide von Titan, Zirkon, Zink, Aluminium, Silicium, Cer oder Zinn sein.

Im Sinne der Erfindung zählen auch Metalloidoxide, wie beispielsweise Siliciumdioxid, zu den Metalloxiden.

Weiterhin können die Matrix und/oder die Domänen amorph und/oder kristallin vorliegen.

### BEZUGSZEICHENLISTE

- 1: Ausgangsmaterial
- 2: Vorerwärmungseinrichtung
- 3: Rollenführung
- 4: Ablegewalze
- 5: Aufwärmeinrichtung
- 6: Teil des herzustellenden Formkörpers
- 7: Werkzeug
- 8: Kühlung
- 9: Vorratsrolle
- 10: Vorlaufrichtung
- 11: Rohmaterialspeicher
- 12: Materialführung
- 13: Tenzerrolle
- 14: Rovingführung
- 15: Formwerkzeug
- 16: Induktionsspule
- 17: Ziehwerkzeug
- 18: Schneidwerkzeug
- 19: Profilabschnitt
- 20: Achse
- 21: Tapeleger
- 22: Tapewickler
- 23: Pultruder
- 24: Endlosprofil
- 25: Aufheizkurve
- 26: Aufheizkurve
- 27: Aufheizkurve

## Patentansprüche

1. Fertigungsverfahren für Formkörper aus Faserverbundwerkstoffen, wobei ein bandförmiges, Verstärkungsfasern und ein duroplastisches oder thermoplastisches Harz aufweisendes Ausgangsmaterial kontinuierlich vorgeschoben oder vorgezogen wird, wobei das vorlaufende Ausgangsmaterial im Durchlauf durch Einkoppeln eines magnetischen Wechselfeldes erwärmt wird, wobei das erwärmte Ausgangsmaterial fortlaufend in den Formkörper geformt wird und wobei das Harz in dem Formkörper ausgehärtet wird, **dadurch gekennzeichnet, dass** das Harz des Ausgangsmaterials (1) mit superparamagnetischen Partikeln versetzt wird, die an das magnetische Wechselfeld ankoppeln.

2. Halbzeug zur Verwendung als Ausgangsmaterial oder erhalten als Zwischenprodukt bei dem Fertigungsverfahren nach Anspruch 1, mit Verstärkungsfasern und einem duroplastischen oder thermoplastischen Harz, das mit magnetischen Partikeln versetzt ist, **dadurch gekennzeichnet, dass** das Halbzeug ein in einer Haupterstreckungsrichtung langgestrecktes Band ist und dass die magnetischen Partikel superparamagnetischen Partikel sind.

3. Fertigungsverfahren nach Anspruch 1 oder Halbzeug nach Anspruch 2, **dadurch gekennzeichnet, dass** die superparamagnetischen Partikel dem Harz des Ausgangsmaterials (1) in einem Anteil von 0,1 bis 50 Gew% zugesetzt werden/sind.

4. Fertigungsverfahren nach Anspruch 1 oder 3 oder Halbzeug nach Anspruch 2 oder 3, **dadurch gekennzeichnet, dass** die superparamagnetischen Partikel Primärpartikel aus magnetischen Metalloxid-Domänen mit einem Durchmesser von 2 bis 100 nm aufweisen.

5. Fertigungsverfahren oder Halbzeug nach Anspruch 4, **dadurch gekennzeichnet, dass** die Primärpartikel in den superparamagnetischen Partikeln in eine nichtmagnetische Metalloxid- oder Metalloidoxid-Matrix eingebettet sind.

6. Fertigungsverfahren nach einem der Ansprüche 1 und 3 bis 5 oder Halbzeug nach einem der Ansprüche 2 bis 5, **dadurch gekennzeichnet, dass** die Verstärkungsfasern unidirektional in der Vorlaufrichtung (10) des Ausgangsmaterials (1) verlaufen.

7. Fertigungsverfahren nach einem der Ansprüche 1 und 3 bis 6, **dadurch gekennzeichnet, dass** das magnetische Wechselfeld mit einer Frequenz von 10 kHz bis 60 MHz, vorzugsweise mit einer Frequenz von 100 kHz bis 10 MHz und noch mehr bevorzugt mit einer Frequenz von 100 kHz bis 1 MHz eingekoppelt wird.

8. Fertigungsverfahren nach einem der Ansprüche 1 und 3 bis 7, **dadurch gekennzeichnet, dass** das Ausgangsmaterial (1) in einem Pultrusionsprozess in den Formkörper geformt wird.

9. Fertigungsverfahren nach Anspruch 8, **dadurch gekennzeichnet, dass** das magnetische Wechselfeld vor einem Formwerkzeug (15) in das Ausgangsmaterial (1) eingekoppelt wird.

10. Fertigungsverfahren nach einem der Ansprüche 1 und 3 bis 7, **dadurch gekennzeichnet, dass** das Ausgangsmaterial (1) in einem Tapelegeprozess an einen bereits vorhandenen Teil des Formkörpers angeformt wird.

11. Fertigungsverfahren nach Anspruch 10, **dadurch gekennzeichnet, dass** das magnetische Wechselfeld im Bereich zwischen Führungsrollen (3) und einem gekühlten Anpresswerkzeug für das Ausgangsmaterial (1) in das Ausgangsmaterial (1) eingekoppelt wird.

12. Fertigungsverfahren nach einem der Ansprüche 1 und 3 bis 7, **dadurch gekennzeichnet, dass** das Ausgangsmaterial (1) in einem Wickelprozess auf einen bereits vorhandenen Teil des Formkörpers aufgewickelt wird.

13. Fertigungsverfahren nach Anspruch 12, **dadurch gekennzeichnet, dass** das magnetische Wechselfeld im Bereich zwischen einer Rovingführung (14) und einem gekühlten Andrückwerkzeug für das Ausgangsmaterial (1) in das Ausgangsmaterial (1) eingekoppelt wird.

14. Fertigungsverfahren nach einem der Ansprüche 1 und 3 bis 13 oder Halbzeug nach einem der Ansprüche 2 bis 6, **dadurch gekennzeichnet, dass** das thermoplastische Harz ein Hochtemperaturthermoplast ist.

15. Fertigungsverfahren oder Halbzeug nach Anspruch 14, **dadurch gekennzeichnet, dass** der Hochtemperaturthermoplast aus der Gruppe von Hochtemperaturthermoplasten ausgewählt ist, die Polyetherketone und Polyphenylensulfide umfasst.

## Claims

1. A method for producing molded articles from fiber composites, wherein a strip-shaped starting material comprising reinforcing fibers and a thermoset or thermoplastic resin is continuously pushed or pulled forward, wherein, as it passes through, the advancing starting material is heated by introducing an alternating magnetic field, wherein the heated starting material is continuously molded into the molded article and wherein the resin in the molded article is cured, **characterized in that** superparamagnetic particles which become coupled to the alternating magnetic field are added to the resin of the starting material (1).

2. A semifinished product for use as a starting material or obtained as an intermediate product in the case of the production method according to claim 1, with reinforcing fibers and a thermoset or thermoplastic resin to which magnetic particles are added, **characterized in that** the semifinished product is a strip which is elongate in a main direction of extent and **in that** the magnetic particles are superparamagnetic particles.

3. A production method according to claim 1 or a semifinished product according to claim 2, **characterized in that** the superparamagnetic particles are added to the resin of the starting material (1) in a proportion of from 0.1 to 50% by weight.

4. A production method according to claim 1 or 3 or a semifinished product according to claim 2 or 3, **characterized in that** the superparamagnetic particles comprise primary particles from magnetic metal-oxide domains with a diameter of from 2 to 100 nm.

5. A production method or a semifinished product according to claim 4, **characterized in that** the primary particles in the superparamagnetic particles are embedded in a non-magnetic metal-oxide or metalloid-oxide matrix.

6. A production method according to any one of claims 1 and 3 to 5 or a semifinished product according to any one of claims 2 to 5, **characterized in that** the reinforcing fibers run unidirectionally in the direction of advancement (10) of the starting material (1).

7. A production method according to any one of claims 1 and 3 to 6, **characterized in that** the alternating magnetic field is introduced with a frequency of from 10 kHz to 60 MHz, preferably with a frequency of from 100 kHz to 10 MHz and still more preferably with a frequency of from 100 kHz to 1 MHz.

8. A production method according to any one of claims 1 and 3 to 7, **characterized in that** the starting material (1) is molded into the molded article in a pultrusion process.

9. A production method according to claim 8, **characterized in that** the alternating magnetic field is introduced into the starting material (1) upstream of a mold (15).

10. A production method according to any one of claims 1 and 3 to 7, **characterized in that** the starting material (1) is molded onto an already existing part of the molded article in a tape laying process.

11. A production method according to claim 10, **characterized in that** the alternating magnetic field is introduced into the starting material (1) in the region between guide rollers (3) and a cooled pressing tool for the starting material (1).

12. A production method according to any one of claims 1 and 3 to 7, **characterized in that** the starting material (1) is wound onto an already existing part of the molded article in a winding process.

13. A production method according to claim 12, **characterized in that** the alternating magnetic field is introduced into the starting material (1) in the region between a roving guide (14) and a cooled pressing tool for the starting material (1).

14. A production method according to any one of claims 1 and 3 to 13 or a semifinished product according to any one of claims 2 to 6, **characterized in that** the thermoplastic resin is a high-temperature thermoplastic.

15. A production method or a semifinished product according to claim 14, **characterized in that** the high-temperature thermoplastic is selected from the group of high-temperature thermoplastics that comprises polyether ketones and polyphenylene sulfides.

## Revendications

1. Procédé de fabrication de corps moulés à base de matériaux composites fibreux, dans lequel on fait avancer ou tire vers l'avant en continu un matériau de départ sous forme de bande, comportant des fibres de renfort et une résine thermodurcissable ou thermoplastique, le matériau de départ qui se déplace étant chauffé sur son parcours par application d'un champ magnétique alternatif, le matériau de départ chauffé étant en se déplaçant façonné en le corps moulé et la résine étant durcie dans le corps moulé, **caractérisé en ce qu'on** ajoute à la résine du matériau de départ (1) des particules superparamagnétiques qui sont sensibles au champ magnétique alternatif.

2. Produit semi-fini pour utilisation en tant que matériau de départ ou obtenu en tant que produit intermédiaire dans le procédé de fabrication selon la revendication 1, comportant des fibres de renfort et une résine thermodurcissable ou thermoplastique qui est mélangée avec des particules magnétiques, **caractérisé en ce que** le produit semi-fini est une bande allongée dans une direction principale d'allongement et **en ce que** les particules magnétiques sont des particules superparamagnétiques.

3. Procédé de fabrication selon la revendication 1 ou produit semi-fini selon la revendication 2, **caractérisé en ce qu**'on ajoute la/les particule(s) superparamagnétique(s) en une proportion de 0,1 à 50 % en poids à la résine du matériau de départ (1).

4. Procédé de fabrication selon la revendication 1 ou 3 ou produit semi-fini selon la revendication 2 ou 3, **caractérisé en ce que** les particules superparamagnétiques comportent des particules primaires à base de domaines d'oxydes métalliques magnétiques ayant un diamètre de 2 à 100 nm.

5. Procédé de fabrication ou produit semi-fini selon la revendication 4, **caractérisé en ce que** dans les particules superparamagnétiques les particules primaires sont incluses dans une matrice d'oxyde métallique ou d'oxyde de métalloïde non magnétique.

6. Procédé de fabrication selon l'une quelconque des revendications 1 et 3 à 5 ou produit semi-fini selon l'une quelconque des revendications 2 à 5, **caractérisé en ce que** les fibres de renfort ont une orientation unidirectionnelle dans le sens d'avancement (10) du matériau de départ (1).

7. Procédé de fabrication selon l'une quelconque des revendications 1 et 3 à 6, **caractérisé en ce que** le champ magnétique alternatif est appliqué à une fréquence de 10 kHz à 60 MHz, de préférence à une fréquence de 100 kHz à 10 MHz et de façon encore plus particulièrement préférée à une fréquence de 100 kHz à 1 MHz.

8. Procédé de fabrication selon l'une quelconque des revendications 1 et 3 à 7, **caractérisé en ce que** le matériau de départ (1) est mis en forme en le corps moulé dans un processus de pultrusion.

9. Procédé de fabrication selon la revendication 8, **caractérisé en ce que** le champ magnétique alternatif est appliqué dans le matériau de départ (1) avant un outil de formage (15).

10. Procédé de fabrication selon l'une quelconque des revendications 1 et 3 à 7, **caractérisé en ce que** le matériau de départ (1) est mis en forme dans un processus de pose de bande sur une partie déjà présente du corps moulé.

11. Procédé de fabrication selon la revendication 10, **caractérisé en ce que** le champ magnétique alternatif est appliqué dans le matériau de départ (1), dans la zone entre des rouleaux de guidage (3) et un outil presseur refroidi pour le matériau de départ (1).

12. Procédé de fabrication selon l'une quelconque des revendications 1 et 3 à 7, **caractérisé en ce que** le matériau de départ (1) est enroulé dans un processus d'enroulement sur une partie déjà présente du corps moulé.

13. Procédé de fabrication selon la revendication 12, **caractérisé en ce que** le champ magnétique alternatif est appliqué dans le matériau de départ (1) dans la zone entre un guide stratifil (14) et un outil de pressage refroidi pour le matériau de départ (1).

14. Procédé de fabrication selon l'une quelconque des revendications 1 et 3 à 13 ou produit semi-fini selon l'une quelconque des revendications 2 à 6, **caractérisé en ce que** la résine thermoplastique est une matière thermoplastique haute température.

15. Procédé de fabrication ou produit semi-fini selon la revendication 14, **caractérisé en ce que** la matière thermoplastique haute température est choisie dans le groupe des matières thermoplastiques haute température qui comprend des polyéthercétones et des poly(sulfure de phénylène)s.
